# EUROPEAN PATENT SPECIFICATION

(11) **EP 4 380 316 B1**
(45) Date of publication and mention of the grant of the patent: **26.11.2025**
(21) Application number: 22210722.9
(22) Date of filing: 01.12.2022
(51) Int. Cl.: H05B 45/382, H05B 45/385, H02M 3/335

(54) **ISOLATED LED CONVERTER**
ISOLIERTER LED-WANDLER
CONVERTISSEUR DE DEL ISOLÉ

(43) Date of publication of application: 05.06.2024
(73) Proprietor: Tridonic GmbH & Co. KG, 6851 Dornbirn (AT)
(72) Inventor: Nachbaur, Stefan, 6850 Dornbirn (AT); Schertler, Markus, 6850 Dornbirn (AT); Stark, Stefan, 6850 Dornbirn (AT); Walch, Patrick, 6850 Dornbirn (AT)
(74) Representative: Rupp, Christian

(56) References cited:
- EP-A1- 4 009 506
- US-A1- 2022 312 564

## Description

### Technical Field

The present disclosure relates to lighting technology, and in particular to an isolated converter for supplying, at its output terminals, a light-emitting diode (LED) load, and a lighting system comprising the same.

### Background Art

The European Patent Application EP 4 009 506 A1 describes a synchronous, primary-side switched and isolated converter with output terminals for driving LED lighting means, having a transformer configured to couple a primary side and a secondary side of the synchronous converter and at least one switch on the primary side, wherein the secondary side comprises a current sensing transformer in series providing a galvanic isolation for sensing an indication of a load current induced in the LED lighting means when connected to the output terminals there.

The US Patent Application US 2022/312564 A1 describes a synchronous flyback converter having terminals for supplying an LED load, comprising a sensing winding coupled to a primary winding of a transformer of the flyback converter and a control unit controlling a primary side switch in series to the primary winding of the flyback converter using a feedback signal for a closed loop control of a secondary side voltage of the flyback converter by controlling the frequency and/or duty cycle of the switching of the primary side switch, wherein the feedback signal is derived from a sensing voltage across the sensing winding sampled once during a switch-on time of a secondary side switch of the flyback converter there.

The direct current (DC) sensing in common isolated LED converter topologies is normally based on sensing transformers being integrated into a current path via the LED load on a secondary side of the LED converter. According to a distinguished sensing approach, the transformer may instead form part of a current path via an electrolytic capacitor being arranged in parallel to the LED load. The sensed signal has a special shape, involving a transient surge followed by a stationary plateau, during which a sampling of the output current should take place, and concluded by a falling edge. As the switching frequency may vary due to dimming, operating point, comparator signal, etc., so does the signal shape of the sensed signal as well as a start of an ideal sample-and-hold (S&H) period relative to the varying signal shape. Depending on the circumstances, it may happen that the S&H period slips out of the stationary plateau and therefore causes a wrong measurement of the load current.

Accordingly, a sensing of the load current in the afore-mentioned distinguished sensing approach should be frequency-independent.

### Summary

This and other objectives are achieved by the embodiments as defined by the appended independent claims. Preferred embodiments are set forth in the dependent claims and in the following description and drawings.

A first aspect of the present disclosure relates to an (galvanically) isolated LED converter, comprising a main transformer (defining a primary side and a secondary side, as to the thus isolated potentials), a primary-side current sensing circuit, a secondary-side current sensing circuit, and a primary-side control circuit. The main transformer comprises inductively coupled windings, being arranged on a primary side and on a secondary side of the converter, respectively. The primary-side current sensing circuit is arranged in series to the primary-side winding, and is configured to sense a signal indicating a current through the primary-side winding. The secondary-side current sensing circuit is arranged in parallel to the secondary-side winding, and is configured to sense a signal indicating a current through a load of the converter. The primary-side control circuit is configured to sample and hold the signal indicating the current through the load during a sample-and-hold period in accordance with a zero-crossing, ZX, of the signal indicating the current through the primary-side winding.

The primary-side current sensing circuit may comprise a primary-side resistor; and the signal indicating the current through the primary-side winding may comprise a voltage across the primary-side resistor of the primary-side current sensing circuit.

The secondary-side current sensing circuit may comprise a current sense transformer comprising inductively coupled windings being arranged on the secondary side and on the primary side of the converter, respectively.

The secondary-side current sensing circuit may further comprise an electrolytic capacitor, being arranged in series to the secondary-side winding of the current sense transformer; and a secondary-side resistor, being arranged in parallel to the secondary-side winding of the current sense transformer.

The secondary-side current sensing circuit may further comprise a primary-side resistor, being arranged in parallel to the primary-side winding of the current sense transformer. The signal indicating the current through the load of the converter may comprise a voltage across the primary-side resistor of the secondary-side current sensing circuit.

A start of the sample-and-hold period may coincide with the ZX.

A start of the sample-and-hold period may coincide with a lapse of a delay time starting at the ZX.

A duration of the sample-and-hold period may comprise 100 ns.

The primary-side control circuit may comprise one of: an application-specific integrated circuit, and a microcontroller.

The converter may comprise a synchronous Flyback converter.

A second aspect of the present disclosure relates to a lighting system, comprising an LED load; and an LED converter as defined previously, being connected to and configured to drive the LED load.

### Advantageous Effects

According to the present disclosure, the sample and hold circuit for sampling the load current is triggered by a zero crossing (coming from the negative domain and entering the positive current domain) of a primary side current through a primary-side switch. This timing assures a correct sampling in the plateau phase of the sensed signal representing the load current. Thereby, measurement fluctuations in the plateau due to a changing switching frequency are counteracted, and noise superimposed on the plateau of the sensed signal is eradicated. As a result, a frequency-independent sensing is achieved in a cost efficient converter topology, such as a synchronous Flyback converter topology.

The technical effects and advantages described above in relation with the isolated LED converter equally apply to the lighting system comprising the same.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
FIG. 1 illustrates a lighting system 2 comprising an isolated LED converter 1 in accordance with the present disclosure;
FIG. 2 illustrates the isolated LED converter 1 of FIG. 1 in more detail; and
FIG. 3 illustrates a timing of an operation of the isolated LED converter 1 of FIGs. 1 and 2 in accordance with the present disclosure.

### Detailed Descriptions of Drawings

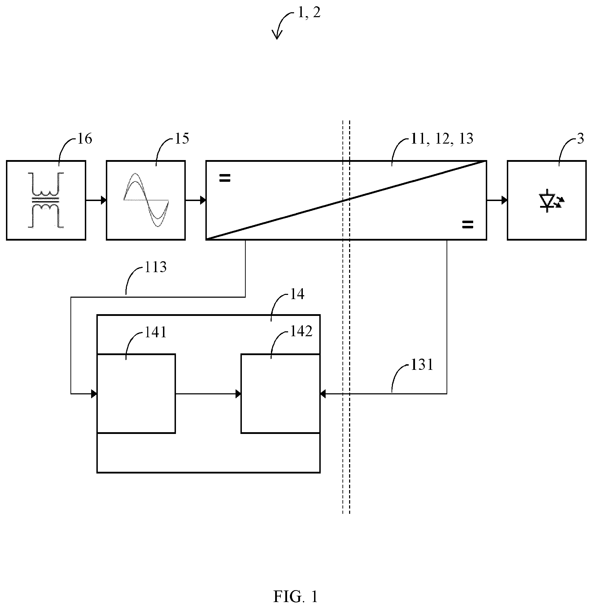

FIG. 1 illustrates a lighting system 2 comprising an isolated LED converter 1 in accordance with the present disclosure.

In a power path, the LED converter 1 may comprise a rectifier and electromagnetic interference (EMI) filter circuit 16, a power factor correction (PFC) circuit 15, and a DC/DC converter 11, 12, 13. In particular, the DC/DC converter 1 may comprise a synchronous Flyback converter.

The LED converter 1 may be connected to and configured to drive an LED load 3 shown on the right of FIG. 1.

Off the power path, the LED converter 1 may further comprise a control circuit 14, which is typically arranged on a primary side (with respect to the isolation barrier) of the isolated LED converter 1.

The primary-side control circuit 14 may comprise one of an integrated circuit, an application-specific integrated circuit and a microcontroller (or a combination or hybrid thereof), and may include circuits 141, 142 for evaluation of sensing signals 113, 131 indicating currents on respective sides of the isolation barrier of the converter 1, as will be explained in more detail below.

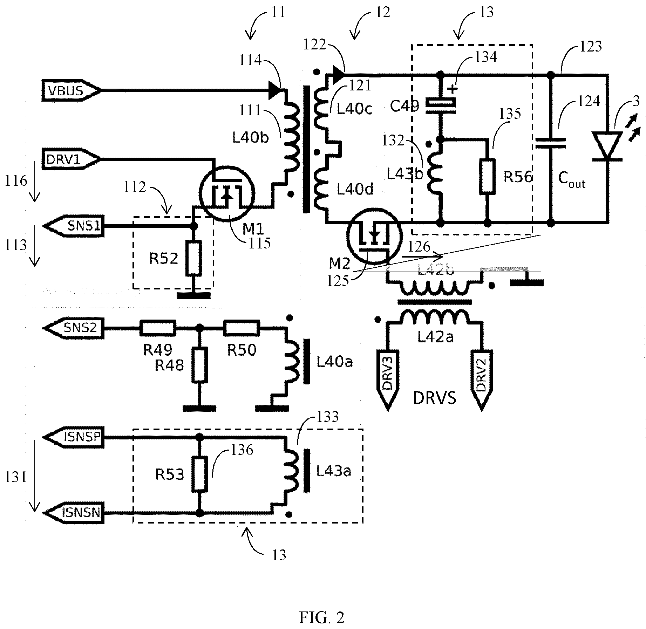

FIG. 2 illustrates the isolated LED converter 1 of FIG. 1 in more detail.

As depicted, the converter 1 may comprise a synchronous Flyback converter, including a primary-side switch 115, M1 for power transfer and a secondary-side switch 125, M2 for energy-efficient synchronous rectification. As shown, the switches 115, 125 may respectively comprise metal oxide field effect transistors (MOSFETs). The secondary-side switch 125, M2 may be controlled in an isolated manner from the primary side, e.g. via a drive transformer with a primary side drive winding L42a and a secondary side drive winding L42b.

The converter may be fed by a DC voltage VBUS supplied for instance from a AC/DC-converter or from a DC/DC-converter.

The converter comprises a main transformer 111; 121, a primary-side current sensing circuit 112, a secondary-side current sensing circuit 13, a primary-side control circuit 14.

The main transformer 111; 121 comprises inductively coupled windings 111; 121, being arranged on a primary side 11 and on a secondary side 12 of the converter 1, respectively, for the power transfer from the primary side 11 (e.g. connected to the PFC circuit 15 of FIG. 1) to the secondary side 12 (connected to the LED load 3).

The primary-side current sensing circuit 112 is arranged in series to the primary-side winding 111, and is configured to sense a signal 113 indicating a current 114, Iₚᵣᵢₘ through the primary-side winding 111.

More specifically, the primary-side current sensing circuit 112 may comprise a primary-side resistor R52.

Further there may be a voltage sensing circuit connected via a voltage sensing winding L40a coupled to the primary-side winding 111 and as well to the secondary-side winding 121. The voltage present on the voltage sensing winding L40a may be connected via a filter circuit R50, R48, R49 to a sensing pin SNS2. The voltage sensing circuit may be used to obtain a signal (and feed it back to the primary side control circuit 14) indicating the output voltage applied to the load 3.

Evidently, the current 114, Iₚᵣᵢₘ through the primary-side winding 111 entails a voltage across the primary-side resistor R52 of the primary-side current sensing circuit 112. Therefore, the signal 113 indicating the current 114, Iₚᵣᵢₘ through the primary-side winding 111 may comprise the voltage across the primary-side resistor R52 of the primary-side current sensing circuit 112.

The secondary-side current sensing circuit 13 is arranged in parallel to the secondary-side winding 121, and is configured to sense a signal 131, I_{SNS} indicating a current 123 through a load 3 of the converter 1.

More specifically, the secondary-side current sensing circuit 13 may comprise a current sense transformer 132, L43b; 133, L43a comprising inductively coupled windings 132, L43b; 133, L43a being arranged on the secondary side 12 and on the primary side 11 of the converter 1, respectively.

The secondary-side current sensing circuit 13 may further comprise an electrolytic capacitor 134, C49, being arranged in series to the secondary-side winding 132, L43b of the current sense transformer 132, L43b; 133, L43a; and a secondary-side resistor 135, R56, being arranged in parallel to the secondary-side winding 132, L43b of the current sense transformer 132, L43b; 133, L43a.

The secondary-side current sensing circuit 13 may further comprise a primary-side resistor 136, R53, being arranged in parallel to the primary-side winding 133, L43a of the current sense transformer 132, L43b; 133, L43a.

The current 123 through the load 3 of the converter 1 entails a change of a voltage across an output capacitor 124, Cₒᵤₜ of the converter 1 being parallel-connected to the LED load 3, and in turn across the secondary-side current sensing circuit 13. Via the current sense transformer 132, L43b; 133, L43a, a voltage across the primary-side resistor 136, R53 of the secondary-side current sensing circuit 13 emerges.

Therefore, the signal 131, I_{SNS} indicating the current 123 through the load 3 of the converter 1 may comprise a voltage across the primary-side resistor 136, R53 of the secondary-side current sensing circuit 13.

As already mentioned, the primary-side control circuit 14 may include circuits 141, 142 (see FIG. 1 above) for evaluation of the sensing signals 113, 131 and VSNS, as will be explained in more detail below. The primary-side control circuit 14 may also be designed to generate and output the drive pulses 116, DRVP of the primary-side switch 115, M1 and drive pulses 126, DRVS of the secondary-side switch 125, M2.

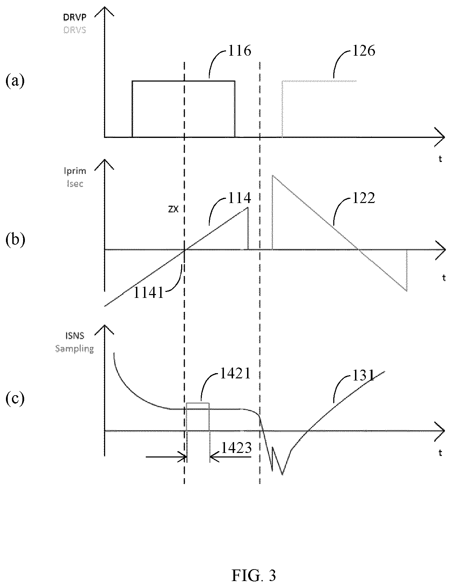

FIG. 3 illustrates a timing of an operation of the isolated LED converter 1 of FIGs. 1 and 2 in accordance with the present disclosure.

In accordance with FIG. 3a, drive pulses 116, DRVP of the primary-side switch 115, M1 and drive pulses 126, DRVS of the secondary-side switch 125, M2 take turns in accordance with a switching frequency (or period) of the DC/DC converter 11, 12, 13.

When the primary-side switch 115, M1 is driven / switched on, the inductance of the primary-side winding 111 of the main transformer 111; 121 causes the current 114, Iₚᵣᵢₘ through the primary-side winding 111 to build up in a ramp. The primary-side current sensing circuit 112 arranged in series to the primary-side winding 111 is configured to sense the signal 113 indicating a current 114, Iₚᵣᵢₘ through the primary-side winding 111.

At some point of the ramp, the signal 113 indicating the current 114, Iₚᵣᵢₘ through the primary-side winding 111 crosses a zero current line (coming from the negative current domain and entering the positive current domain). This is termed the zero-crossing, ZX 1141, of the signal 113. As the primary-side current sensing circuit 112 may comprise a primary-side resistor R52, the sensing signal 113 and the sensed current 114, Iₚᵣᵢₘ may be proportional to one another.

Also when the primary-side switch 115, M1 is driven / switched on, the signal 131, I_{SNS} (see FIG. 3c) indicating the current 123 through the load 3 undergoes a transient surge followed by a flat plateau, during which the sampling should take place.

The inventors have found that the ZX 1141 consistently coincides with the start of the flat plateau of the signal 131, I_{SNS}.

To this end, the primary-side control circuit 14 is configured to sample and hold the signal 131, I_{SNS} (see FIG. 3c) indicating the current 123 through the load 3 during a sample-and-hold period 1421 (see FIG. 3c) in accordance with the ZX 1141 (see FIG. 3b) of the signal 113 indicating the current 114, Iₚᵣᵢₘ through the primary-side winding 111.

In particular, a start of the sample-and-hold period 1421 may coincide with the above-mentioned ZX 1141. Thereby, a frequency-independent start of the sample-and-hold period 1421 is achieved.

In accordance with FIG. 3c, a duration 1423 of the sample-and-hold period 1421 may comprise 100 ns, for example, which is short enough for a wide range of switching frequencies. The sampling based on a finite sample-and-hold period 1421 facilitates a noise-suppressed sampling.

Alternatively (not shown), a start of the sample-and-hold period 1421 may coincide with a lapse of a delay time starting at the ZX 1141. Thereby, the start of the sample-and-hold period 1421 may be delayed by a predetermined delay.

## Claims

1. An isolated LED converter (1), comprising
a main transformer (111; 121), comprising
inductively coupled windings (111; 121), being arranged on a primary side (11) and on a secondary side (12) of the converter (1), respectively;
a primary-side current sensing circuit (112),
being arranged in series to the primary-side winding (111), and
being configured to sense a signal (113) indicating a current (114, Iₚᵣᵢₘ) through the primary-side winding (111);
a secondary-side current sensing circuit (13),
being configured to sense a signal (131, I_{SNS}) indicating a current (123) through a load (3) of the converter (1); and
a primary-side control circuit (14),
being configured to sample and hold the signal (131, I_{SNS}) indicating the current (123) through the load (3) during a sample-and-hold period (1421) in accordance with a zero-crossing, ZX (1141), of the signal (113) indicating the current (114, Iₚᵣᵢₘ) through the primary-side winding (111);
**characterised by**
an output capacitor (124, Cout), connected in parallel with the load (3), and
the secondary-side current sensing circuit (13) being arranged in parallel to the secondary-side winding (121).

2. The converter (1) of claim 1,
the primary-side current sensing circuit (112) comprising
a primary-side resistor (R52); and
the signal (113) indicating the current (114, Iₚᵣᵢₘ) through the primary-side winding (111) comprising a voltage across the primary-side resistor (R52) of the primary-side current sensing circuit (112).

3. The converter (1) of claim 1 or claim 2,
the secondary-side current sensing circuit (13) comprising
a current sense transformer (132, L43b; 133, L43a), comprising
inductively coupled windings (132, L43b; 133, L43a),
being arranged on the secondary side (12) and on the primary side (11) of the converter (1), respectively.

4. The converter (1) of claim 3,
the secondary-side current sensing circuit (13) further comprising
an electrolytic capacitor (134, C49), being arranged in series to the secondary-side winding (132, L43b) of the current sense transformer (132, L43b; 133, L43a); and
a secondary-side resistor (135, R56), being arranged in parallel to the secondary-side winding (132, L43b) of the current sense transformer (132, L43b; 133, L43a).

5. The converter (1) of claim 4,
the secondary-side current sensing circuit (13) further comprising
a primary-side resistor (136, R53), being arranged in parallel to the primary-side winding (133, L43a) of the current sense transformer (132, L43b; 133, L43a); and
the signal (131, I_{SNS}) indicating the current (123) through the load (3) of the converter (1) comprising a voltage across the primary-side resistor (136, R53) of the secondary-side current sensing circuit (13).

6. The converter (1) of any one of the claims 1 to 5,
a start of the sample-and-hold period (1421) coinciding with the ZX (1141).

7. The converter (1) of any one of the claims 1 to 5,
a start of the sample-and-hold period (1421) coinciding with a lapse of a delay time starting at the ZX (1141).

8. The converter (1) of any one of the preceding claims,
a duration (1423) of the sample-and-hold period (1421) comprising 100 ns.

9. The converter (1) of any one of the preceding claims,
the primary-side control circuit (14) comprising one of:
an application-specific integrated circuit, and
a microcontroller.

10. The converter (1) of any one of the preceding claims,
the converter (1) comprising a synchronous Flyback converter.

11. A lighting system (2), comprising
an LED load (3); and
an isolated LED converter (1) of any one of the preceding claims, being connected to and configured to drive the LED load (3).

## Patentansprüche

1. **Galvanisch isolierter LED-Konverter (1),** umfassend
einen Haupttransformator (111; 121) mit induktiv gekoppelten Wicklungen (111; 121), die jeweils an einer Primärseite (11) bzw. an einer Sekundärseite (12) des Konverters (1) angeordnet sind;
eine primärseitige Strommessschaltung (112), die in Reihe mit der primärseitigen Wicklung (111) angeordnet ist und konfiguriert ist, ein Signal (113) zu erfassen, das einen Strom (114, Iprim) durch die primärseitige Wicklung (111) anzeigt;
eine sekundärseitige Strommessschaltung (13), die konfiguriert ist, ein Signal (131, IsNs) zu erfassen, das einen Strom (123) durch eine Last (3) des Konverters (1) anzeigt; und
eine primärseitige Steuerschaltung (14), die konfiguriert ist, das Signal (131, IsNs), das den Strom (123) durch die Last (3) anzeigt, während einer Abtast- und Halteperiode (1421) in Übereinstimmung mit einem Nulldurchgang ZX (1141) des Signals (113), das den Strom (114, Iprim) durch die primärseitige Wicklung (111) anzeigt, abzutasten und zu halten;
**dadurch gekennzeichnet, dass**
ein Ausgangskondensator (124, Cout) parallel zur Last (3) geschaltet ist und
die sekundärseitige Strommessschaltung (13) parallel zur sekundärseitigen Wicklung (121) angeordnet ist.

2. **Der Konverter (1) nach Anspruch 1,** wobei die primärseitige Strommessschaltung (112) einen primärseitigen Widerstand (R52) umfasst und wobei das Signal (113), das den Strom (114, Iprim) durch die primärseitige Wicklung (111) anzeigt, eine Spannung über dem primärseitigen Widerstand (R52) der primärseitigen Strommessschaltung (112) umfasst.

3. **Der Konverter (1) nach Anspruch 1 oder 2,** wobei die sekundärseitige Strommessschaltung (13) einen Strommesstransformator (132, L43b; 133, L43a) umfasst, der induktiv gekoppelte Wicklungen (132, L43b; 133, L43a) aufweist, die jeweils an der Sekundärseite (12) bzw. an der Primärseite (11) des Konverters (1) angeordnet sind.

4. **Der Konverter (1) nach Anspruch 3,** wobei die sekundärseitige Strommessschaltung (13) **ferner** Folgendes umfasst:
einen Elektrolytkondensator (134, C49), der in Reihe mit der sekundärseitigen Wicklung (132, L43b) des Strommesstransformators (132, L43b; 133, L43a) geschaltet ist; und
einen sekundärseitigen Widerstand (135, R56), der parallel zur sekundärseitigen Wicklung (132, L43b) des Strommesstransformators (132, L43b; 133, L43a) geschaltet ist.

5. **Der Konverter (1) nach Anspruch 4,** wobei die sekundärseitige Strommessschaltung (13) **ferner** einen primärseitigen Widerstand (136, R53) umfasst, der parallel zur primärseitigen Wicklung (133, L43a) des Strommesstransformators (132, L43b; 133, L43a) geschaltet ist; und wobei das Signal (131, IsNs), das den Strom (123) durch die Last (3) des Konverters (1) anzeigt, eine Spannung über dem primärseitigen Widerstand (136, R53) der sekundärseitigen Strommessschaltung (13) umfasst.

6. **Der Konverter (1) nach einem der Ansprüche 1 bis 5,** wobei ein **Beginn** der Abtast- und Halteperiode (1421) mit dem ZX (1141) zusammenfällt.

7. **Der Konverter (1) nach einem der Ansprüche 1 bis 5,** wobei ein **Beginn** der Abtast- und Halteperiode (1421) mit dem Ablauf einer Verzögerungszeit zusammenfällt, die beim ZX (1141) beginnt.

8. **Der Konverter (1) nach einem der vorhergehenden Ansprüche,** wobei eine **Dauer** (1423) der Abtast- und Halteperiode (1421) 100 ns beträgt.

9. **Der Konverter (1) nach einem der vorhergehenden Ansprüche,** wobei die primärseitige Steuerschaltung (14) entweder eine anwendungsspezifische integrierte Schaltung (ASIC) oder einen Mikrocontroller umfasst.

10. **Der Konverter (1) nach einem der vorhergehenden Ansprüche,** wobei der Konverter (1) einen synchronen **Sperrwandler** umfasst.

11. **Beleuchtungssystem (2),** umfassend
eine LED-Last (3); und
einen galvanisch isolierten LED-Konverter (1) nach einem der vorhergehenden Ansprüche, der mit der LED-Last (3) verbunden und dazu konfiguriert ist, die LED-Last (3) anzusteuern.

## Revendications

1. **Convertisseur de LED isolé (1)** comprenant
un transformateur principal (111; 121) comprenant des enroulements couplés inductivement (111; 121) disposés respectivement sur un côté primaire (11) et un côté secondaire (12) du convertisseur (1) ;
un circuit de détection de courant côté primaire (112), disposé en série avec l'enroulement côté primaire (111), et configuré pour détecter un signal (113) indiquant un courant (114, Iprim) circulant dans l'enroulement côté primaire (111) ; un circuit de détection de courant côté secondaire (13), configuré pour détecter un signal (131, IsNs) indiquant un courant (123) traversant une charge (3) du convertisseur (1) ; et
un circuit de commande côté primaire (14), configuré pour échantillonner et maintenir le signal (131, IsNs) indiquant le courant (123) traversant la charge (3) pendant une période d'échantillonnage et de maintien (1421) en fonction d'un passage par zéro, ZX (1141), du signal (113) indiquant le courant (114, Iprim) circulant dans l'enroulement côté primaire (111) ;
**caractérisé en ce que**
un condensateur de sortie (124, Cout) est connecté en parallèle avec la charge (3), et le circuit de détection de courant côté secondaire (13) est disposé en parallèle sur l'enroulement côté secondaire (121).

2. **Convertisseur (1) selon la revendication 1,** dans lequel le circuit de détection de courant côté primaire (112) comprend une résistance côté primaire (R52), et dans lequel le signal (113) indiquant le courant (114, Iprim) circulant dans l'enroulement côté primaire (111) comprend une tension aux bornes de la résistance côté primaire (R52) dudit circuit de détection de courant côté primaire (112).

3. **Convertisseur (1) selon la revendication 1 ou 2,** dans lequel le circuit de détection de courant côté secondaire (13) comprend un transformateur de mesure de courant (132, L43b ; 133, L43a) comportant des enroulements couplés inductivement (132, L43b ; 133, L43a) respectivement disposés sur le côté secondaire (12) et sur le côté primaire (11) du convertisseur (1).

4. **Convertisseur (1) selon la revendication 3,** dans lequel le circuit de détection de courant côté secondaire (13) comprend en outre :
un condensateur électrolytique (134, C49), disposé en série avec l'enroulement côté secondaire (132, L43b) du transformateur de mesure de courant (132, L43b ; 133, L43a) ; et
une résistance côté secondaire (135, R56), disposée en parallèle sur l'enroulement côté secondaire (132, L43b) dudit transformateur de mesure de courant (132, L43b ; 133, L43a).

5. **Convertisseur (1) selon la revendication 4,** dans lequel le circuit de détection de courant côté secondaire (13) comprend en outre :
une résistance côté primaire (136, R53), disposée en parallèle sur l'enroulement côté primaire (133, L43a) du transformateur de mesure de courant (132, L43b ; 133, L43a) ; et
le signal (131, IsNs) indiquant le courant (123) traversant la charge (3) du convertisseur (1) comprend une tension aux bornes de la résistance côté primaire (136, R53) dudit circuit de détection de courant côté secondaire (13).

6. **Convertisseur (1) selon l'une quelconque des revendications 1 à 5,** dans lequel le début de la période d'échantillonnage et de maintien (1421) **coïncide avec** le ZX (1141).

7. **Convertisseur (1) selon l'une quelconque des revendications 1 à 5,** dans lequel le début de la période d'échantillonnage et de maintien (1421) **coïncide avec** l'expiration d'un délai commençant au ZX (1141).

8. **Convertisseur (1) selon l'une quelconque des revendications précédentes,** dans lequel **la durée** (1423) de la période d'échantillonnage et de maintien (1421) est de 100 ns.

9. **Convertisseur (1) selon l'une quelconque des revendications précédentes,** dans lequel le circuit de commande côté primaire (14) comprend l'un des éléments suivants :
un circuit intégré spécifique à une application (ASIC) ; ou
un microcontrôleur.

10. **Convertisseur (1) selon l'une quelconque des revendications précédentes,** dans lequel le convertisseur (1) comprend un convertisseur **flyback** synchrone.

11. **Système d'éclairage (2),** comprenant
une charge de LED (3) ; et
un convertisseur de LED isolé (1) selon l'une quelconque des revendications précédentes, connecté à ladite charge de LED (3) et configuré pour l'alimenter.
